(19) Europäisches Patentamt
European Patent Office
Office européen des brevets

(11) Publication number: **0 204 370 A1**

# (12) EUROPEAN PATENT APPLICATION

(21) Application number: **86200932.1**

(22) Date of filing: **29.05.86**

(51) Int. Cl.[4]: **C04B 24/16**, E21B 33/13, E21D 11/10

(30) Priority: **05.06.85 US 587771**

(43) Date of publication of application: **10.12.86 Bulletin 86/50**

(84) Designated Contracting States: **DE FR GB IT NL**

(71) Applicant: **DOWELL SCHLUMBERGER INCORPORATED**
**P.O.Box 4378**
**Houston Texas 77210(US)**

(72) Inventor: **Loeffler, Norman Raymond**
**4222 East 97th Street**
**Tulsa Oklahoma 74137(US)**

(74) Representative: **Richebourg, Michel François**
**Etudes et Fabrication Dowell Schlumberger**
**Z.I. Molina La Chazotte B.P. 90**
**F-42003 Saint-Etienne Cédex 1(FR)**

## (54) Foamable hydraulic cement compositions and methods of using same.

(57) Compatible combinations of foaming agents and dispersing agents have been discovered which make practicable the preparation of high strength, low density foamed hydraulic cements from starting point aqueous hydraulic cement slurries having densities in excess of 14.5 lbs/gallon. More specifically, surfactant materials comprising the ammonium salt of certain sulfated, ethoxylated higher aliphatic alcohols have been found to be effective foaming agents for high density aqueous hydraulic cement slurries comprising dispersing agents such as alkali metal salts of sulfonated polynaphthalene formaldehyde materials, sulfonated and/or aminated lignin based materials, alkali metal halide salts such as sodium chloride, organic acids such as citric acid, polyacrylate materials and the like.

EP 0 204 370 A1

# FOAMABLE HYDRAULIC CEMENT COMPOSITIONS AND METHODS OF USING SAME

## BACKGROUND OF THE INVENTION

The present invention pertains to novel hydraulic cement compositions and to the use of same for cementing void spaces in subterranean formations. Such invention also pertains to foamable and foamed hydraulic cement compositions having, after foaming and hardening, relatively high strength as a function of density.

Pumpable aqueous hydraulic cement slurries are known as is the use thereof in plugging off or sealing void spaces in subterranean formations such as, for example, in cementing the annulus between a well casing and the borehole in gas, oil, and geothermal wells, etc.; in plugging abandoned wells or mine shafts; in grouting mine shafts; and the like.

Additionally, it is also known that the aforementioned aqueous hydraulic cement slurries can be foamed (i.e., so as to incorporate discrete, stable gas bubbles therein and thereby effectively reducing the density of said slurry and of the cement mass resulting upon the hardening thereof) by incorporating a foaming agent material in said slurry and thereafter vigorously admixing the resulting slurry with a gaseous material. Such technique is particularly useful in those instances wherein it is desired to place a long column of cement in a relatively weak subterranean formation (e.g., a formation which would be prone to fracture under the hydrostatic head associated with non-foamed conventional cement slurries in their normal density ranges). Unfortunately, however, the foaming of a particular cement slurry of a given density to a lower density generally results in the hardened cement foam material having a lower compressive strength than a non-foamed mass of the denser neat cement slurry would have had upon hardening. Accordingly, even though these known foamed cement systems do have definite and distinct benefits and advantages, such systems are not without limitations as to the realm of their practical utility.

Further, it is additionally known from previously published experimentation that the water-to-cement ratio in foamed aqueous cement slurries has a major effect on the strength of the resulting foamed cement after hardening. That is, at a given post-foaming density, the higher the starting non-foamed slurry density is, the higher will be the strength development of the resulting foamed cement. See "Low Density Foam Cements Solve Many Oil Field Problems", World Oil, June 1982, pages 71-186. Thus, armed with this knowledge it would appear to be theoretically possible to substantially broaden the range of operability and/or applicability of foamed cementing operations for subterranean cementing applications such as oil and/or gas well cementing applications, mine shaft grouting applications and the like. Unfortunately, however, it is, as a practical matter, typically necessary to employ a dispersing agent in aqueous hydraulic cement slurries having densities in excess of about 14.5 to 15 lbs/gallon to render them sufficiently fluid for pumping with conventional oil field pumping equipment. Also unfortunately, it has been found that the presence of said dispersing agents drastically interfers with the foaming capability of many known commonly available surfactant materials which would otherwise constitute promising candidates for foaming agent usage.

Accordingly, it would be highly desirable to develop, discover or identify foaming agent materials which would be compatible with the aforementioned dispersing agent materials and which would thereby facilitate the preparation of foamable aqueous cement slurries having densities in excess of 14.5 lbs/gallon using presently available full scale oil field cement mixing and pumping equipment.

## SUMMARY OF THE INVENTION

It has now been discovered that a certain class of ammonium salts of sulfated ethoxylated higher aliphatic alcohols are compatible with various dispersing agent materials (e.g., such as alkali metal salts of sulfonated polynaphthalene formaldehyde, sulfonated and/or aminated lignin based materials, alkali metal halide salts such as sodium chloride, organic acids such as citric acid, polyacrylate materials, and the like) and that such sulfated ethoxylated aliphatic alcohol ammonium salts are therefore effective as foaming agents for aqueous hydraulic cement slurries containing said dispersing agent materials. Accordingly, in one aspect the present invention is a foamable aqueous hydraulic cement slurry comprising hydraulic cement, water, a dispersing agent and a foaming agent component comprising the ammonium salt of a sulfated ethoxylated $C_6$ to about $C_{12}$ aliphatic alcohol.

In another aspect, the present invention is a method for cementing a void space in a subterranean formation comprising preparing the aforementioned foamable aqueous hydraulic cement slurry; intimately admixing said aqueous slurry with a gaseous material so as to form discrete stable gas bubbles of said gaseous material throughout said slurry; and emplacing the resulting gasified aqueous slurry into said subterranean void and permitting same to harden therein.

The various embodiments of the present invention are particularly advantageous in the sense that they represent a practical means for providing the types of relatively low density oil/gas well cementing formulations which are needed for weak and/or fracture sensitive formations while at the same time retaining exceptionally good strength characteristics. Indeed, it has been found that hardened foamed cements prepared according to the present invention, even at densities as low as about 8 lb/gallon, had sufficient strength and integrity to withstand conventional perforation and fracturing operations.

When foamed cement slurry density is referred to herein, it is to be understood as corresponding to the density as measured under normal laboratory conditions (e.g., atmospheric pressure and at a temperature in the range of from about 70 to about 80°F) unless otherwise specified.

## DETAILED DESCRIPTION OF THE INVENTION

Hydraulic cement materials suitable for use in the practice of the present invention include any of those conventionally used for subterranean cementing operations (e.g., in oil, gas and/or geothermal well cementing operations; mine shaft grouting and in mine cementing applications; and the like). Examples of such suitable hydraulic cement materials include the known classes of Portland cement materials, high alumina cement materials, etc. with the commonly used oil field grade Portland cements (e.g., API Class A, C, G and H and ASTM Types I, II and III) being particularly preferred.

As has been noted, dispersing agent materials are employed in the compositions of the present invention for the purpose rendering the aqueous cement slurries hereof transportable (e.g., pumpable) by conventional handling equipment (e.g., conventional oil field positive displacement pumping equipment etc.) even at relatively high slurry densities such as, for example, in excess of 14.5 lbs/gallon and more particularly in excess of 16 or 16.5 lb./gallon. Suitable dispersing agent materials for use for such purpose include any of those cement additives which are known to notably reduce the apparent viscosity of an aqueous cement slurry at a given density level. Representative examples of such suitable dispersing agent materials include alkali metal salts of sulfonated polynaphthalene formaldehyde condensation products, sulfonated and/or aminated lignin based materials, alkali metal halide salts such as sodium chloride, organic acids such as citric acid, polyacrylate materials, and the like. The amount of the aforementioned dispersing agent materials employed in the practice of the present invention is, functionally speaking, an amount sufficient to render the cement slurry of concern capable of being pumped and sufficiently fluid to permit entrainment of gases prior to placement in the desired subterranean formation (e.g., pumpable) using conventional cement mixing and handling equipment (e.g., conventional positive displacement oil field serving pumps, and the like). More preferably, such dispersing agent is typically employed in an amount sufficient to cause the cement slurry of concern to have a viscosity, in freshly prepared form, of less than about 300 centipoise at 200 $sec^{-1}$ as determined by API Spec. 10, Appendix H.

While the amount of dispersing agent employed in practice to accomplish the aforestated function may, in numerical or quantitative terms, vary depending upon the precise compositional make-up on the slurry of concern, such amount will generally be within the range of from about 0.01 to about 10 (preferably from about 0.1 to about 2) weight percent based upon the weight of the hydraulic cement material.

Foaming agent materials which have been found to be compatible with the aforementioned dispersing agent additives can be generally described as being ammonium salts of sulfated ethoxylated $C_6$ to about $C_{12}$ aliphatic alcohol materials. More preferably, such foaming agent materials are the ammonium salts of sulfated ethylene oxide adducts of $C_8$ to about $C_{12}$ fatty alcohol materials - (e.g., ammonium salts of sulfated ethoxylated $C_8$ to about $C_{12}$ fatty alcohols). Most preferably, such foaming agent materials are the ammonium salts of a sulfated ethoxylated fatty alcohol which correspond to the formula:

$$R\!\left(O-CH_2-CH_2\right)_x O-\overset{O}{\underset{O}{\overset{\|}{\underset{\|}{S}}}}-O^{\ominus}\quad \overset{\oplus}{NH4}$$

wherein R is a monovalent aliphatic radical containing from about 8 to about 12 carbon atoms and wherein x is an integer of from about 1 to about 5 - (preferably from 1 to 4).

The amount of the aforementioned foaming agent material employed for the purposes of the present invention is not particularly critical so long as it is an amount sufficient to cause the aqueous hydraulic cement slurry of interest to be foamable in character. As a general rule however said foaming agent will be employed in an amount ranging from about 0.01 to about 15 weight percent based upon the weight of the hydraulic cement material and will more preferably be employed in an amount of from about 0.5 to about 5 weight percent on the indicated hydraulic cement material weight basis.

In addition to the foregoing ingredients, the hydraulic cement compositions of the present invention can, if desired, contain various known conventional additive materials in their usual proportions. Thus, for example, conventional setting accelerators such as calcium chloride, etc. can be employed in their customary proportions (e.g., from about 0.1 to about 5 weight percent based upon the hydraulic cement material) if desired in a given instance. Similarly, conventional extender additives such as, for example, anhydrous alkali metal (especially sodium) metasilicates can be employed in similar proportions when and as desired for a particular purpose. Indeed, it has been observed that the use of each of the foregoing optional additives (particularly in combination) has a surprisingly beneficial inpact upon the stability of the foamed cement compositions of the present invention and particularly for those based upon Class H Portland cement and formed from especially dense starting point slurries (e.g., those in the 17 to 20 lb/gallon slurry density range).

In addition to the foregoing additives, conventional relatively light weight pozzolanic materials such as fly ash can also be employed in the cementing compositions of the present invention and, when used, such materials can be employed in relatively large proportions such as, for example, in amounts ranging up to about 75 weight percent based upon the weight of the hydraulic cement materials. Furthermore, other types of commonly used cement additives such as retarders, weighting agents (e.g., in amounts typically ranging from about 1 to about 65 weight percent based upon the weight of the hydraulic cement materials and including commonly used weighting materials such as for example, ilmenite, barite, hematite and the like), fluid loss control additives and the like can also be employed in conjunction with the foamable cement slurries of the present invention.

In preparing the foamable aqueous hydraulic cement slurries of the present invention conventional oil well cement formulation, mixing and foaming techniques and equipment may be suitably employed. Preferably, however, the hydraulic cement material and the various aforementioned additives which are in dry powder form will first be thoroughly dry blended and the resulting dry blend will then be thoroughly admixed (e.g., either batchwise or continuously) first with the desired amount of mix water (and with any desired additives in liquid form) and subsequently with the gaseous material to be employed as the operative foam-forming ingredient.

The amount of mix water employed can vary substantially and the actual amount employed will primarily depend upon the initial slurry density desired for the non-foamed but foamable starting point slurry composition. While such initial slurry density can range from fairly low densities (e.g., such as in the 10 to 12 lb/gallon range) to fairly high densities (e.g., in excess of the 14.5, especially from about 15 to about 21, lb/gallon range), the hereinbefore described most pronounced, desirable and advantageous benefits of the present invention are obtained when said initial slurry densities are controlled to within the above-noted relatively high density region. Accordingly, it is generally preferred that the mix water be employed in an amount ranging from about 25 to about 50 - (more preferably from about 25 to about 35) parts by weight based upon the weight of the hydraulic cement material.

The gaseous material employed to foam the above-described foamable cement composition can suitably be any gaseous material capable of forming stable, discrete gas bubbles throughout the aqueous cement slurry of interest. From the practical standpoints of safety, cost and ready availability, however, it is generally preferred to employ - (typically in compressed form) air or nitrogen as the gaseous material of choice.

The amount of gaseous material employed in a given instance will of course vary as a function of specific results (e.g., final foam density etc.) desired in such instance. As a general rule however, said gaseous material will be incorporated into the aqueous cement slurry in an amount sufficient to reduce the density of said slurry (at ambient temperature and normal atmospheric pressure) by at least about 1 lb/gallon.

In an especially preferred embodiment of the present invention the density of the aqueous cement slurry prior to the incorporation of said gaseous material is from about 15 to about 21 lbs/gallon and the density thereof (at ambient temperature and atmospheric pressure) following the incorporation of said gaseous material is in the range of from about 6 to about 19 (most preferably from about 8 to about 16) lb/gallon.

The following examples will serve to further illustrate and exemplify the present invention and the various features and aspects thereof.

Example 1

In this example, a series of foamed cement samples are prepared and tested for 24 hour compressive strength development.

In conducting these experiments, a dry cement blend is prepared by admixing a Class H Portland cement with 0.5 weight percent based on weight of cement (BWOC) of the sodium salt of a sulfonated polynaphthalene formaldehyde condensate - (dispersant), 1 weight percent BWOC of calcium chloride (accelerator) and 1 weight percent BWOC of anhydrous sodium silicate (extender).

Various amounts of said dry blended mixture are blended with distilled water in a 1200 ml. stainless steel, screwed-top Waring Blender to provide aqueous cement slurries of different densities ranging from 16.5 to 17.44 lb/gallon.

In preparing said slurry, the water and dry blend mix is blended for 15 seconds at "lo" speed and is then switched to "hi" speed for 30 seconds. Thereafter 0.5 weight percent BWOC of a solution of 85 weight percent of the ammonium salt of a sulfated ethoxylated $C_{10-12}$ fatty alcohol surfactant - (foaming agent) in 15 weight % polypropylene glycol is added to the aqueous cement slurry and the resulting slurry is agitated at "hi" speed for an additional 5 seconds in the Waring Blender to foam same.

The resulting foamed slurry is then poured into a 2" x 2" x 2" cubical greased mold and is permitted to harden in the mold for 24 hours in a 80° ± 5°F water bath. Thereafter, the compressive strength of the resulting foamed cement specimens is determine pursuant to API Specifications for Materials and Testing for Well Cements, Section 7.9.

The compositional details and compressive strength results for each of various foamed cement samples are summarized in Table I below. In addition, results are presented in Table I for comparative purposes for foam samples in which lower starting point density slurries are employed - (employing no dispersant material and a different surfactant as the foaming agent) and for a run corresponding to those described above except that the sulfated ethoxylated fatty alcohol foaming agent material is not employed therein.

TABLE I

| Run Number | SURFACTANT Type | SURFACTANT Amount (% BOWC) | Amount of Dispersant[3] (% BWOC) | Density of Base Slurry (lb/gal) | Density of Foamed Slurry (lb/gal) | 24 Hour Compressive Strength at 80°F (psi) |
|---|---|---|---|---|---|---|
| C-1* | A[1] | 0.5 | 0 | 14.2 | about 6 | 25 |
| C-2* | A | 0.5 | 0 | 14.2 | 8.1 | 162 |
| C-3* | A | 0.5 | 0 | 14.2 | about 10 | 261 |
| C-4* | None | None | 0.5 | 16.5 | Not Foamed | 3021 |
| I.1 | B[2] | 0.5 | 0.5 | 16.5 | 6.91 | 151 |
| I.2 | B | 0.5 | 0.5 | 16.5 | 9.07 | 289 |
| I.3 | B | 0.5 | 0.5 | 16.5 | 9.77 | 590 |
| I.4 | B | 0.5 | 0.5 | 16.5 | 11.80 | 1058 |
| I.5 | B | 0.5 | 0.5 | 16.5 | 13.64 | 1764 |
| I.6 | B | 0.5 | 0.5 | 17.44 | 7.05 | 109 |
| I.7 | B | 0.5 | 0.5 | 17.44 | 8.18 | 150 |
| I.8 | B | 0.5 | 0.5 | 17.44 | 9.05 | 373 |
| I.9 | B | 0.5 | 0.5 | 17.44 | 10.60 | 755 |
| I.10 | B | 0.5 | 0.5 | 17.44 | 12.38 | 1291 |
| I.11 | B | 0.5 | 0.5 | 17.44 | 13.02 | 2030 |

* Not an example of the present invention.
1. Surfactant A = Cationic surfactant material composed of 75 weight % coco trimethyl ammonium chloride and 25 weight % (2-hydroxyethyl) cocoamine oxide.
2. Surfactant B = Blend of 85 weight % ammonium salt of sulfated ethoxylated $C_{10-12}$ fatty alcohol and 15 weight percent polypropylene glycol.
3. Dispersant = sodium salt of sulfonated polynaphthalene formaldehyde condensate.

As can be seen from the results in Table I, at a given post-foaming density 24-hour compressive strengths which are generally substantially higher are provided by starting with a relatively high initial (i.e., unfoamed) slurry density (e.g., 16.5 or 17.44 lb/gallon) as opposed to a relatively lower initial slurry density (e.g., such as 14.2 lb/gallon).

As has been noted previously, the indicated higher density slurries typically require the use of a dispersant or superplasticizer additive to render them capable of handling with conventional oil field mixing and pumping equipment. As has also been noted, most commonly available surfactant materials such as, for example, sodium lauryl sulfate, alkyl diphenyl oxide disulfonate salts, alkyl phosphates, etc. have been found to be incompatible with said dispersing agent materials and thus ineffective for use as foaming agents in the practice of the present invention.

Example 2

In this example, several commercially available surfactant materials are subjected to a screening test to evaluate their suitability for use as foaming agents for dispersing agent-containing hydraulic cement slurries.

The aqueous hydraulic cement slurry recipe employed in such testing is as follows:

| Ingredient | Amount |
|---|---|
| API Class H Portland Cement | 860 grams |
| Mix Water | 300 grams |
| Dispersing agent* | 4.3 grams |
| Foaming Agent Candidate | 5 milliliters |

* Dispersing agent corresponds to sodium salt of a sulfonated polynaphthalene formaldehyde condensate material employed in Example 1 above.

In carrying out such screening test procedure, the cement and dispersing agent are first thoroughly blended together; the water is placed in a 1200 ml stainless steel screw-top Waring Blender; and the dry cement + dispersing agent mixture is added thereto. The resulting mixture is mixed at "lo" speed for 15 seconds and then the foaming agent candidate of interest is added and the mixture is agitated for 30 seconds at "hi" speed.

Acceptable foaming agent materials are those which produce a full blender cup of foamed material within the first 10 seconds or so of agitation. This is typically accompanied by (or detectable in the stainless steel blender cup with) an audibly noticeable increase in the pitch of the blender's agitator.

Unacceptable foaming agent candidates are those which fail to cause the blender cup to be filled (as evidenced by the absence of a cavitation whine) even after the full 30 seconds of agitation at "hi" blender speed.

The various surfactants screened according to the foregoing test procedure are identified in Table II below along with a summary of the evaluation results.

TABLE II

| Run Number | Foaming Agent Candidate: Trade Name | Chemical Type | Amount (% BVOW[1]) | Comments/Observations as to Suitability as Foaming Agent |
|---|---|---|---|---|
| II.1* | Dowfax 2A1[2] | Dialkyl Disulfonate Salt | 1.66% | Foam Collapse. |
| II.2* | Duponol WAQ[3] | Sodium Lauryl Sulfate | 2.6% | Foam Collapse. |
| II.3* | Duponol E P[3] | Alkylamine Sulfate Salt | 2.0% | Foam Collapse. |
| II.4* | Aerosol 30[4] | Cocoamidopropyl Betaine | 3.3% | Foam Collapse. |
| II.5* | Aerosol 200[4] | Ethoxylated Alkyl Amide Salt | 3.3% | Foam Collapse. |
| II.6* | Aerosol 22[4] | Alkyl Succinamate Salt | 3.3% | Foam Collapse. |
| II.7* | Steol 7N[5] | Sodium Alkyl ($C_{10-14}$) Ether Sulfate | 1.7% | Foam Collapse. |

TABLE II (CONTINUED)

| Run Number | Foaming Agent Candidate: Trade Name | Chemical Type | Amount (% BVOW[1]) | Comments/Observations as to Suitability as Foaming Agent |
|---|---|---|---|---|
| II.8* | Steol KA460[5] | $C_{10-14}$ Alkyl Ether Sulfate ($NH_4$ Salt) | 1.7% | Foam Collapse. |
| II.9* | Steol CA460[5] | Coconut ($C_{12-14}$) Ether Sulfate ($NH_4$ Salt) | 1.7% | Foam Collapse. |
| II.10* | Steol CS460[5] | Coconut ($C_{12-14}$) Ether Sulfate (Sodium Salt) | 1.7% | Foam Collapse. |
| II.11 | Steol FA60[5] | Ammonium Salt of Sulfated, Ethoxylated (n=2-4)$C_{10-12}$ Fatty Alcohol | 1.75% | Stable Foam Obtained. |
| II.12 | Steol FA56[5] | Ammonium Salt of Sulfated Ethoxylated (n=2-4)$C_{10-12}$ Fatty Alcohol | 3.4% | Stable Foam Obtained. |
| II.13 | Steposol CA-207[5] | Ammonium Salt of Sulfated, Ethoxylated (n=2-4)$C_{8-10}$ Fatty Alcohol | 1.75% | Stable Foam Obtained. |

TABLE II (CONTINUED)

| Run Number | Foaming Agent Candidate: Trade Name | Foaming Agent Candidate: Chemical Type | Foaming Agent Candidate: Amount (% BVOW[1]) | Comments/Observations as to Suitability as Foaming Agent |
|---|---|---|---|---|
| II.14 | Sulfotex RAW[6] | Ammonium Salt of Sulfated Ethoxylated (n=1-3)$C_{8-10}$ Fatty Alcohol | 1.75% | Stable Foam Obtained. |
| II.15 | Sulfotex PAW[6] | Ammonium Salt of Sulfated Ethoxylated (n=1-3)$C_{10-14}$ Fatty Alcohol | 1.75% | Stable Foam Obtained. |

* Not an example of the present invention.

1. % BVOW means volume percent based on volume of water.
2. Available from The Dow Chemical Company.
3. Available from E. I. duPont de Nemours Company.
4. Available from American Cyanamid.
5. Available from Stepan Chemical Company.
6. Available from Henkel Corporation.

As can be seen from the results in Table II, suitability or operability as foaming agents in the dispersant-containing hydraulic cement compositions of the present invention is highly selective and critical and indicates that the foaming agent employed should be an ammonium salt of a sulfated, ethoxylated higher (e.g., $C_6$ to about $C_{14}$ and especially $C_8$ to about $C_{12}$) aliphatic alcohol material.

Additional testing with several other commercially available surfactant materials has further confirmed the necessity or importance of employing the indicated type of foaming agent materials in the practice of the present invention.

Example 3

In this example, a series of foamed cement samples are prepared having densities in the range of about 9.4 to about 10 lb/gallon from relatively high density aqueous slurries having initial densities ranging from about 17 to about 20.2 lb/gallon.

Each of the slurries employ an API Class H Portland cement and contain 1.75% BVOW of a foaming agent composed of 15 weight percent propylene glycol and 85 weight percent of the ammonium salt of a sulfated, ethoxylated $C_{10-12}$ fatty alcohol and 0.5% BWOC of a dispersant composed of the sodium salt of a sulfonated polynaphthalene formaldehyde condensation product. In addition, said slurries also contain additional additives (i.e., weighting agent, accelerator and extender additives) as indicated in Table III below.

The compositional details and results for this series of experiments are summarized in Table III below.

TABLE III

| Run Number | Initial Slurry Density (lb/gal) | Foamed Cement Density (lb/gal) | Class H Cement, g | Weighting Agent,[1] g | Water, g | Accelerator[2], g | Extender[3], g | Foam Stability |
|---|---|---|---|---|---|---|---|---|
| III.1 | 16.98 | 9.6 | 750 | 250 | 360 | 0 | 0 | Large bubbles noted in cup center after preparation, foam collapse in less than 30 min.[4] |
| III.2 | 18.50 | 9.45 | 750 | 250 | 320 | 10 | 10 | Good cell distribution and stability. Surface smooth and creamy consistency.[5] |
| III.3 | 19.14 | 9.36 | 700 | 300 | 300 | 10 | 10 | Good cell distribution and stability.[5] |
| III.4 | 19.60 | 9.8 | 675 | 325 | 275 | 10 | 10 | Slightly "coarser" in appearance due to higher ilmenite content. Stability OK[5] |
| III.5 | 20.18 | 9.98 | 650 | 350 | 250 | 10 | 10 | Surface appears "coarse" and grain due to higher ilmenite content. Stability OK[6] |

1. Weighting agent is ilmenite.
2. Accelerator is calcium chloride.
3. Extender is anhydrous sodium metasilicate.
4. Removal of extender and accelerator from recipe destabilized this high density system.
5. Extender and accelerator enhance foam stability.
6. Good foam was produced upon drying.

As can be seen from the results in Table III, it is preferable to utilize extender and accelerator additive (such as anhydrous sodium metasilicate and calcium chloride, respectively) when working with the relatively higher initial density (e.g., 17 lb/gallon and above) API Class H Portland cement slurries.

While the practice of the present invention has been illustrated and described by reference to particular examples and embodiments thereof, such is not to be interpreted as in any way limiting the scope of the instantly claimed invention.

## Claims

1. A foamable aqueous hydraulic cement slurry comprising hydraulic cement, water, a dispersing agent and a foaming agent component comprising the ammonium salt of a sulfated, ethoxylated $C_6$ to about $C_{12}$ higher aliphatic alçohol.

2. The foamable aqueous hydraulic cement slurry of Claim 1 wherein the foaming agent is the ammonium salt of a sulfated, ethoxylated $C_8$ to about $C_{12}$ fatty alcohol.

3. The foamable aqueous hydraulic cement slurry of Claim 1 wherein said slurry has a density of greater than 14.5 lbs/gallon and wherein said dispersant is employed in an amount sufficient to cause the viscosity of said slurry, in freshly prepared form, to be less than about 300 centipoise at 200 $sec^{-1}$.

4. The foamable aqueous hydraulic cement slurry of Claim 1 wherein the dispersant employed is an alkali metal salt of a sulfonated polynaphthalene formaldehyde material, a sulfonated or aminated lignin material, an alkali metal halide salt, an organic acid or a polyacrylate material.

5. The foamable slurry of Claim 1 wherein the dispersing agent is employed in an amount ranging from about 0.01 to about 10 weight percent based upon the weight of the hydraulic cement material.

6. The foamable slurry of Claim 1 wherein the dispersing agent is employed in an amount ranging from about 0.1 to about 2.0 weight percent based upon the weight of the hydraulic cement material.

7. The foamable slurry of Claim 1 wherein the foaming agent is employed in an amount ranging from about 0.01 to about 15 weight percent based upon the weight of the hydraulic cement material.

8. The foamable slurry of Claim1 wherein the foaming agent is employed in an amount ranging from about 0.5 to about 5 weight percent based upon the weight of the hydraulic cement material.

9. The foamable slurry of Claim 1 wherein the hydraulic cement material is Portland cement.

10. The foamable slurry of Claim 1 wherein from about 25 to about 50 parts by weight of water is employed per 100 parts by weight of the hydraulic cement material.

11. A method of cementing a void space in a subterranean formation comprising:

A. preparing a foamable aqueous hydraulic cement slurry comprising hydraulic cement, water, a dispersing agent and a foaming agent component comprising the ammonium salt of a sulfated, ethoxylated $C_6$ to about $C_{12}$ higher aliphatic alcohol;

B. intimately admixing said aqueous slurry with a gaseous material so as to form discrete stable bubbles of said gaseous material throughout said slurry; and

C. emplacing the resulting gasified aqueous slurry into said subterranean void and permitting same to harden therein.

European Patent Office

# EUROPEAN SEARCH REPORT

Application number

EP 86 20 0932

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| Y | DE-A-2 003 682 (IND. & HANDELSASSOC. VAN HEERBOS-LUIJTEN) * Claims 1,3; page 4, line 29 - page 5, line 2; page 10, lines 9-12 * | 1-10 | C 04 B 24/16<br>E 21 B 33/13<br>E 21 D 11/10 |
| Y | FR-A- 907 975 (R. FAYS) * Abstract, point 1; example 1 * | 1-10 | |
| A | FR-E- 54 147 (R. FAYS) * Abstract, point 1; page 1, lines 38-44 * | 1,4,5, 7 | |
| A | CHEMICAL ABSTRACTS, vol. 100, no. 14, April 1984, page 300, abstract no. 108289y, Columbus, Ohio, US; & JP - A - 58 44 629 (SHOWA DENKO K.K. MISAWA HOMES CO. LTD.) 04-10-1983 | | TECHNICAL FIELDS SEARCHED (Int. Cl.4)<br>C 04 B 24/00<br>C 04 B 28/00<br>E 21 B 33/00 |
| A | WORLD OIL, vol. 198, no. 6, May 1984, pages 135,136,138,140,142,144, Houston, Texas, US; T. SMITH et al.: "Light, strong foamed cement: A new tool for problem wells" | | |

The present search report has been drawn up for all claims

| Place of search | Date of completion of the search | Examiner |
|---|---|---|
| THE HAGUE | 08-09-1986 | DAELEMAN P.C.A. |

CATEGORY OF CITED DOCUMENTS

X : particularly relevant if taken alone
Y : particularly relevant if combined with another document of the same category
A : technological background
O : non-written disclosure
P : intermediate document
T : theory or principle underlying the invention
E : earlier patent document, but published on, or after the filing date
D : document cited in the application
L : document cited for other reasons
& : member of the same patent family, corresponding document

EPO Form 1503 03 82